# EUROPEAN PATENT SPECIFICATION

(11) **EP 2 289 994 B1**
(45) Date of publication and mention of the grant of the patent: **26.09.2012**
(21) Application number: 09762624.6
(22) Date of filing: 08.06.2009
(51) Int. Cl.: C08L 25/06, C08K 3/26, C08K 3/34, B65D 81/38, C08J 9/00, C08K 13/02

(54) **ABSORBENT MASTER BATCH CHIP COMPOSITION FOR A POLYSTYRENE FOAM TRAY**
ABSORBIERENDE MASTERBATCH-SPANZUSAMMENSETZUNG FÜR EINE SCHALE AUS POLYSTYROLSCHAUMSTOFF
COMPOSITION DE COPEAUX DE MÉLANGE-MAÎTRE ABSORBANT POUR UN PLATEAU EN POLYSTYRÈNE EXPANSÉ

(30) Priority: 12.06.2008 KR 20080055379
(43) Date of publication of application: 02.03.2011
(73) Proprietor: Samjin Polytech Co., Ltd., Gyeonggi-do 451-833 (KR)
(72) Inventor: LEE, Gyoo Hwan, Gyeonggi-do 445-709 (KR)
(74) Representative: Zenz
(86) International application number: PCT/KR2009/003047
(87) International publication number: WO 2009/151237

(56) References cited:
- WO-A1-00/53669
- WO-A2-2006/078521
- JP-A- 4 023 846
- JP-A- 9 183 882
- JP-A- 2006 307 019
- KR-A- 20010 013 714
- KR-A- 20050 000 633
- US-A- 6 093 751
- DATABASE WPI Week 200382 Thomson Scientific, London, GB; AN 2003-882637 XP002669179, -& JP 2003 192857 A (KANEKA CORP) 9 July 2003 (2003-07-09)
- DATABASE WPI Week 200703 Thomson Scientific, London, GB; AN 2007-021123 XP002669180, -& JP 2006 307019 A (TOYO KAGAKU KK) 9 November 2006 (2006-11-09)

## Description

### Field of the Invention

The present invention relates to an absorbent resin composition, and more specifically, to an absorbent master batch resin composition that is added to a polystyrene resin for preparing a polystyrene foam tray.

### Background of the Invention

A polystyrene foam tray is widely in use as a tray for packaging a product. Specifically, the polystyrene foam tray is widely in use for packaging a fish, a fruit, and the like, as well as all sorts of meats, such as fresh meat, a chicken, and the like. In other words, all sorts of fish, or meat, such as pork, a beef, a chicken, and the like, are put in a tray, are packaged with a wrap, and then are put into circulation.

Meat or fish that is put in the polystyrene foam tray releases water, so that the released water will fill inside the packaged tray. Most of the released water mixes with a blood of meat or fish, so that the water mixed with a blood will fill in the tray. The water mixed with a blood that fills in the polystyrene foam tray is looked bad, and also is hygienically bad.

Nevertheless, the polystyrene foam tray does not have an absorbent property and a hygroscopic property in itself, so that the water mixed with a blood could not be removed. A way for packaging the content altogether with a specific component, such as an absorbent material or a hygroscopic material inside the tray was attempted, but the way had no effect.

Therefore, the inventors decided that if the polystyrene foam tray can absorb water or water mixed with a blood released from content, such as meat or fish, the above-mentioned problem would be resolved. So, the inventors developed a new master batch chip composition having an excellent absorbent property, which is added to the polystyrene resin.

### Objects of the Invention

The object of the present invention is to provide a new master batch chip composition that is added to a polystyrene resin for preparing a polystyrene foam tray having an excellent absorbent property.

Another object of the present invention is to provide a method for preparing the new master batch chip composition having an excellent absorbent property, which is added to the polystyrene resin.

Another object of the present invention is to provide a polystyrene foam tray having an excellent absorbent property by adding the master batch chip composition having an absorbent property to the polystyrene resin.

The above-mentioned objects and other objects can be achieved according to the present invention as described in the following.

### Technical Solution

An absorbent master batch chip composition for a polystyrene foam tray according to the present invention includes about 1∼80 parts by weight of an organic anionic sulphonate represented by the following Chemical Formula I or the following Chemical Formula II, about 1∼75 parts by weight of a calcium carbonate (CaCO₃), and about 1∼50 parts by weight of talc, with respect to 100 parts by weight of a polystyrene basic resin including a general purpose polystyrene (GPPS), a high impact polystyrene (HIPS), and the like: 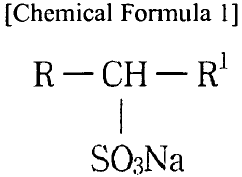 [Chemical Formula II] R - SO₃Na

wherein,
R and R¹ are C₁₃₋₁₈ alkane residual group.

A representative organic anionic sulphonate is a secondary n-alkane sulphonate, and a surfactant, such as a linear alkyl sulphonate (LAS), a linear alkylbenzene sulphonate (LABS), an alpha olefine sulfonate (AOS), a sodium lauryl sulphate (SLS), and the like can be preferably used.

The calcium carbonate has the role of a compatibilizer for the uniform absorption and mixing of the organic anionic sulphonate, and the talc has the role of a nucleating agent, which ensures that cells are small and uniformly distributed during foaming.

Master batch chips are produced by mixing the ingredients of the master batch chip composition in a super mixer such that the organic anionic sulphonate is uniformly distributed in the basic resin, extruding from an extruder and then cutting into pellets.

The absorbent master batch chip prepared by the present invention mixes to the polystyrene resin to prepare a sheet phase, and the prepared polystyrene sheet is vacuum-moulded to prepare the polystyrene foam tray as a final product.

Hereinafter, the detailed description of the present invention will be descried in detail.

### Advantageous Effects

The present invention relates to an absorbent master batch resin composition that is added to a polystyrene resin for preparing an absorbent polystyrene foam tray.

The absorbent master batch chip composition according to the present invention is used for preparing the polystyrene foam tray that can absorb water by mixing the absorbent master batch chip composition with the polystyrene resin. In addition, the absorbent master batch chip composition according to the present invention is used for providing a hygienic stable packaging and a visually clean packaging by absorbing water or water mixed with a blood that is released when all sorts of fish as well as fresh meats are packaged into the polystyrene foam tray.

A main material of the absorbent polystyrene foam tray according to the present invention is a polystyrene resin, and mixes with the absorbent master batch chip composition according to the present invention to prepare as the sheet phase. And then the sheet phase is vacuum-moulded to prepare trays in various sizes and shapes. The main material is the polystyrene resin, but other resin, such as an ethyl vinyl alcohol (EVA), a polyethylene (PE), polystyrene, SBS (styrene-butadienestyrene), and the like can be partially included in adequate amount.

A basic resin of the absorbent master batch chip composition according to the present invention is polystyrene. The resin used in the present invention is a general purpose polystyrene (GPPS), a high impact polystyrene (HIPS), or the mixed polystyrene thereof. The mixture of the general-purpose polystyrene and the high impact polystyrene may be preferably used, and the ratio preferably is within about 50∼70 to 50~30 with respect to weight rate.

The organic anionic sulphonate is added in the range of about 1∼80 parts by weight with respect to 100 parts by weight of the polystyrene basic resin. The organic anionic sulphonate has the structure represented by the following Chemical Formula I or Chemical Formula II: 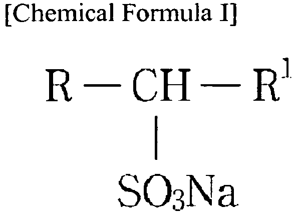 [Chemical Formula II] R - SO₃Na

wherein,
R and R¹ are C₁₃₋₁₈ alkane residual group.

A representative organic anionic sulphonate is a secondary n-alkane sulphonate, and a surfactant, such as a linear alkyl sulphonate (LAS, represented by the following Chemical Formula III), a linear alkylbenzene sulphonate (LABS, represented by the following Chemical Formula IV), an alpha olefine sulfonate (AOS, represented by the following Chemical Formula V), a sodium lauryl sulphate (SLS, represented by the following Chemical Formula VI), and the like can be preferably used:

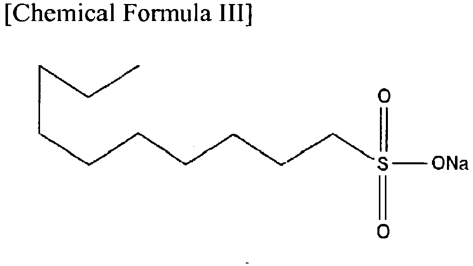

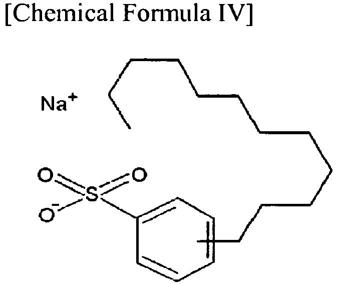

[Chemical Formula V] CₙH₂ₙ₋₁SO₃⁻Na⁺

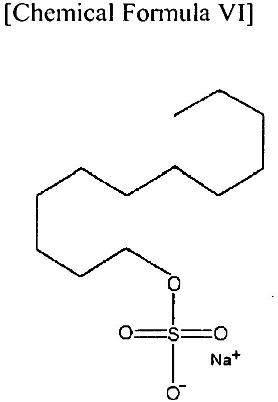

The organic anionic sulphonate used in the present invention can use a carboxylate, such as a long chain fatty acid alkali salt (soap), N-acrylamino acid salt, an alkyl ether carbon acid salt, an acylated peptide, and the like; sulphonate, such as an alkyl sulphonate, alkyl benzene and alkyl amino acid salt, an alkylnaphthalene sulphonate, sulphosuccinate, and the like; sulfuric acid ester salt, such as a sulfated oil, an alkyl sulphate, an alky ether sulphate, an alkyl amyl ether sulphate, an alkyl amide sulphate, and the like; an anionic surfactant, such as an alkyl phosphate, an alkyl ether phosphate, an alkyl aryl ether phosphate, and the like, as an anionic surfactant.

About 1∼75 parts by weight of the calcium carbonate (CaCO₃) and about 1∼50 parts by weight of talc are mixed with 100 parts by weight of the polystyrene basic resin. The carbon carbonate has the role of a compatibilising agent for the uniform absorption and mixing of the organic anionic sulphonate, and the talc has the role of a nucleating agent, which ensures that cells are small and uniformly distributed during foaming.

Master batch chips are produced by mixing the ingredients of the master batch chip composition in a super mixer such that the organic anionic sulphonate is uniformly distributed in the basic resin, extruding from an extruder and then cutting into pellets. When mixing in the super mixer, the organic anionic sulphonate is melted by a self-heat generated from the mixer, and then the melted organic anionic sulphonate is absorbed into the calcium carbonate and the talc to be uniformly distributed in the resin. The uniformly mixed mixture is extruded in the extruder, cooled, and then cut into pellets to prepare the master batch chip. The absorbent master batch chip prepared by the present invention is mixed with the polystyrene resin to prepare a sheet phase, and the prepared polystyrene sheet is vacuum-moulded to prepare the polystyrene foam tray as a final product. About 1∼20 parts by weight of the absorbent master batch chip according to the present invention is added to 100 parts by weight of the polystyrene resin to mould the sheet phase. Preferably, about 5∼10 parts by weight of the absorbent master batch chip according to the present invention is added to 100 parts by weight of the polystyrene resin. The moulded sheet phase is vacuum-moulded to prepare trays in various sizes and shapes.

The absorbent polystyrene foam tray prepared by the present invention can absorb about water of 2/1 coffee cup per a tray within 30 minutes. When water can be generally absorbed within 2 hours for packaging a fresh meat or fish, there is no problem visually or hygienically. Nevertheless, the absorbent rate of the absorbent polystyrene foam tray according to the present invention is better than the above-mentioned absorbent rate.

The present invention will be all specifically described by the following embodiments, which are just described for the purpose of illustration and are not limited to the scope of the present invention.

### Detailed Description of the Invention

### Examples 1-8: Absorbent Master Batch Chip

### Example 1

40 kg of Hostapur SAS 93 (available from Clariant Produkte (Deutchland) GmbH, Germany) as an organic anionic sulphonate, 38 kg of a calcium carbonate (CaCO₃), and 9 kg of Talc are added and mixed with 100 kg of a polystyrene basic resin including 45 kg of a general purpose polystyrene (GPPS) and 55 kg of a high impact polystyrene (HIPS). The organic anionic sulphonate is a secondary n-alkane sulphonate, and for the added paraffin parts, n-paraffin of less than C₁₃ is maximum 1%, n-paraffin of C₁₃∼C₁₅ is about 58%, n-paraffin of C₁₆∼C₁₇ is about 39%, and n-paraffin of at least C₁₇ is maximum 1%.

Master batch chips are produced by mixing the ingredients of the master batch chip composition in a super mixer such that the organic anionic sulphonate is uniformly distributed in the basic resin, extruding from an extruder and then cutting into pellets.

### Example 2

Example 2 used the same method used for Example 1, but 5 kg of a linear alkyl sulphonate (LAS) as the organic anionic sulphonate was used.

### Example 3

Example 3 used the same method used for Example 1, but 30 kg of a linear alkylbenzene sulphonate (LABS) as the organic anionic sulphonate was used.

### Example 4

Example 4 used the same method used for Example 1, but 60 kg of an alpha olefine sulfonate (AOS) as the organic anionic sulphonate was used.

### Example 5

Example 5 used the same method used for Example 1, but 70 kg of a sodium lauryl sulphate (SLS) as the organic anionic sulphonate was used.

### Example 6

Example 6 used the same method used for Example 1, but 3 kg of the calcium carbonate (CaCO₃) and 30 kg of Talc were used.

### Example 7

Example 7 used the same method used for Example 1, but 50 kg of the calcium carbonate (CaCO₃) and 5 kg of Talc were used.

### Example 8

Example 8 used the same method used for Example 1, but 30 kg of the calcium carbonate (CaCO₃) and 45 kg of Talc were used.

### Examples 9-16: Preparing Polystyrene Foam Tray

### Example 9

0.1 kg of the absorbent master batch chip prepared in Example 2 was mixed with 10 kg of the polystyrene resin, extruded a polystyrene sheet, and then vacuum-moulded to prepare a polystyrene foam tray.

### Example 10

Example 10 used the same method used for Example 10, but 0.3 kg of the absorbent master batch chip prepared in Example 2 was used.

### Example 11

Example 11 used the same method used for Example 10, but 0.5 kg of the absorbent master batch chip prepared in Example 3 was used.

### Example 12

Example 12 used the same method used for Example 10, but 0.5 kg of the absorbent master batch chip prepared in Example 4 was used.

### Example 13

Example 13 used the same method used for Example 10, but 0.7 kg of the absorbent master batch chip prepared in Example 5 was used.

### Example 14

Example 14 used the same method used for Example 10, but 0.9 kg of the absorbent master batch chip prepared in Example 6 was used.

### Example 15

Example 15 used the same method used for Example 10, but 1.4 kg of the absorbent master batch chip prepared in Example 7 was used.

### Example 16

Example 16 used the same method used for Example 10, but 1.9 kg of the absorbent master batch chip prepared in Example 8 was used.

The absorbent foam trays prepared by the above-mentioned Examples 9-16 can absorb about water of 2/1 coffee cup per a tray within 30 minutes from visual results.

The effect of the present invention is to provide the polystyrene foam tray having an excellent absorbent property by providing a new master batch chip composition having an excellent absorbent property.

## Claims

1. An absorbent master batch chip composition for a polystyrene foam tray, comprising:
100 parts by weight of a polystyrene basic resin;
1∼80 parts by weight of an organic anionic sulphonate represented by the following Chemical Formula I or Chemical Formula II;
1∼75 parts by weight of a calcium carbonate (CaCO₃) ; and
1-50 parts by weight of a talc: 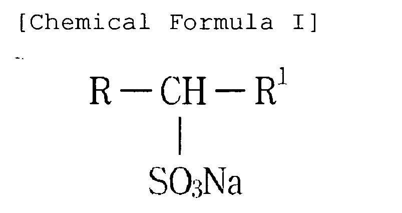
[Chemical Formula II] R - SO₃Na
wherein,
R and R¹ are C₁₃₋₁₈ alkane residual group.

2. The absorbent master batch chip composition according to claim 1, wherein the polystyrene basic resin includes a general purpose polystyrene (GPPS) and a high impact polystyrene (HIPS).

3. The absorbent master batch chip composition according to claim 1, wherein the organic anionic sulphonate is a secondary n-alkane sulphonate.

4. The absorbent master batch chip composition according to claim 1, wherein the organic anionic sulphonate is one or more selected from the group consisting of a linear alkyl sulphonate (LAS), an alpha olefine sulfonate (AOS), and a sodium lauryl sulphate (SLS).

5. A method for preparing an absorbent master batch chip composition for a polystyrene foam tray according to claim 1, comprising:
mixing 1∼80 parts by weight of an organic anionic sulphonate, 1~75 parts by weight of a calcium carbonate (CaCO₃) and 1~50 parts by weight of a talc, with respect to 100 parts by weight of a polystyrene basic resin in a super mixer and then melting the organic anionic sulphonate to allow the melted organic anionic sulphonate to be uniformly distributed;
extruding the mixture in an extruder;
cooling the extrusion; and
cutting the cooled extrusion into pellets.

## Patentansprüche

1. Eine absorbierende Master-Batch-Chip-Zusammensetzung für eine Polystyren-Schaumstoffeinlage, aufweisend:
100 Gewichtsteile eines Polystyren-Basisharzes,
1∼80 Gewichtsteile eines organischen anionischen Sulfonates wiedergegeben durch die folgende chemische Formel I oder chemische Formel II;
1∼75 Gewichtsteile Kalziumkarbonat (CaCO₃), und
1∼50 Gewichtsteile Talkum: 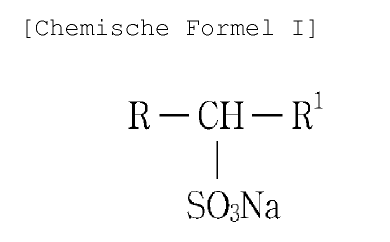
[Chemische Formel II] R-SO₃Na
wobei, R und R¹ C₁₃₋₁₈ Alkanrestgruppen sind.

2. Die absorbierende Master-Batch-Chip-Zusammensetzung nach Anspruch 1, wobei das Polystyren-Basisharz ein Standard-Polystyren (GPPS) und ein schlagzähes Polystyren (HIPS) umfasst.

3. Die absorbierende Master-Batch-Chip-Zusammensetzung nach Anspruch 1, wobei das organische anionische Sulfonat ein sekundäres n-Alkan-Sulfonat ist.

4. Die absorbierende Master-Batch-Chip-Zusammensetzung nach Anspruch 1, wobei das organische anionische Sulfonat eins oder mehrere ausgewählt aus der Gruppe bestehend aus einem linearen Alkylsulfonat (LAS), einem alpha-Olefinsulfonat (AOS) und einem Natriumlaurylsulfat (SLS) ist.

5. Ein Verfahren zum Herstellen einer absorbierenden Master-Batch-Chip-Zusammensetzung für eine Polystyren-Schaumstoffeinlage nach Anspruch 1, aufweisend:
Vermischen von 1∼80 Gewichtsteilen eines organischen anionischen Sulfonats, 1∼75 Gewichtsteilen Kalziumkarbonat (CaCO₃) und 1∼50 Gewichtsteilen Talkum, in Bezug auf 100 Gewichtsteile eines Polystyren-Basisharzes in einem Super-Mixer und anschließendes Schmelzen des organischen anionischen Sulfonats, um zu ermöglichen, dass das geschmolzene organische anionische Sulfonat gleichförmig verteilt wird,
Extrudieren der Mischung in einem Extruder,
Kühlen der Extrusion, und
Schneiden der gekühlten Extrusion in Pellets.

## Revendications

1. Composition de copeaux de mélange maître absorbant pour un plateau en mousse de poly(styrène), comprenant :
100 parties en poids d'une résine de base de poly(styrène) ;
1 - 80 parties en poids d'un sulfonate anionique organique représenté par la formule chimique I ou la formule chimique II suivante ;
1 - 75 parties en poids d'un carbonate de calcium (CaCO₃) ; et
1 - 50 parties en poids d'un talc : 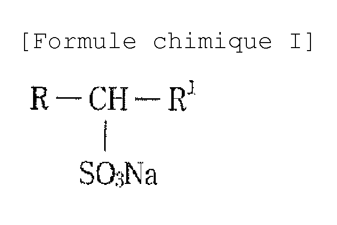
[Formule chimique II] R-SO₃Na
dans laquelle,
R et R¹ sont un groupe résiduel alcane en C₁₃-₁₈.

2. Composition de copeaux de mélange maître selon la revendication 1, dans laquelle la résine de base de poly(styrène) inclut du poly(styrène) universel (PSU) et du poly(styrène) à haute résistance aux chocs (PSHRC).

3. Composition de copeaux de mélange maître absorbant selon la revendication 1, dans laquelle le sulfonate anionique organique est un n-alcane sulfonate secondaire.

4. Composition de copeaux de mélange maître absorbant selon la revendication 1, dans laquelle le sulfonate anionique organique est un ou plusieurs éléments choisis dans le groupe constitué par un sulfonate d'alkyle linéaire (SAL), un sulfonate d'alphaoléfine (SAO) et un laurylsulfate de sodium (LSS).

5. Procédé de préparation d'une composition de copeaux de mélange maître absorbant pour un plateau en mousse de poly(styrène) selon la revendication 1, comprenant :
le mélange de 1 - 80 parties en poids d'un sulfonate anionique organique, de 1 - 75 parties en poids d'un carbonate de calcium (CaCO₃) et 1 - 50 parties en poids d'un talc, pour 100 parties en poids d'une résine de base de poly(styrène) dans un super mélangeur puis la fusion du sulfonate anionique organique pour permettre au sulfonate anionique organique fondu d'être uniformément distribué ;
l'extrusion du mélange dans une extrudeuse ;
le refroidissement de l'extrudat ; et
la découpe de l'extrudat refroidi sous forme de pastilles.
